# EUROPEAN PATENT APPLICATION

(11) **EP 3 757 793 A1**
(43) Date of publication of application: **30.12.2020**
(21) Application number: 20164434.1
(22) Date of filing: 20.03.2020
(51) Int. Cl.: G06F 11/36, G06F 11/34, G06F 21/62

(54) **MACHINE-ASSISTED QUALITY ASSURANCE AND SOFTWARE IMPROVEMENT**

(30) Priority: 27.06.2019 US 201916455380
(71) Applicant: Intel Corporation, Santa Clara, CA 95054 (US)
(72) Inventor: HEINECKE, Alexander, Santa Clara, CA 95054 (US); MARTINEZ-SPESSOT, Cesar, Santa Clara, CA 95054 (US); OLIVER, Dario, Santa Clara, CA 95054 (US); GOTTSCHLICH, Justin, Santa Clara, CA 95054 (US); CARRANZA, Marcos, Santa Clara, CA 95054 (US); GUZMAN, Mateo, Santa Clara, CA 95054 (US); AGERSTAM, Mats, Santa Clara, CA 95054 (US)
(74) Representative: Rummler, Felix

(57) **Abstract**

Apparatus, systems, methods, and articles of manufacture for automated quality assurance and software improvement are disclosed. An example apparatus includes a data processor to process data corresponding to events occurring with respect to a software application in i) a development and/or a testing environment and ii) a production environment. The example apparatus includes a model tool to: generate a first model of expected software usage based on the data corresponding to events occurring in the development and/or the testing environment; and generate a second model of actual software usage based on the data corresponding to events occurring in the production environment. The example apparatus includes a model comparator to compare the first model to the second model. The example apparatus includes a correction generator to generate an actionable recommendation to adjust the development and/or the testing environment to reduce a difference between the first model and the second model.

## Description

### FIELD OF THE DISCLOSURE

This disclosure relates generally to quality assurance and software improvement, and, more particularly, to machines and associated methods for automated quality assurance and software improvement.

### BACKGROUND

Performance and reliability are vital for a software package to achieve success in the marketplace. However, quality assurance (QA) in software development is a complex task. Software developers are reluctant to invest in QA activities. As a result, proficient QA professionals are difficult to find in the software field, given that software developers prefer development activities instead of QA activities. Additionally, many software solutions may require very specific domain area expertise which makes the challenge even harder.

Test Driven Development (TDD) practices depend heavily on the software developers' capabilities to write good tests and are restricted to the capabilities of the testing framework. Manual QA cycles take time and cannot be executed as part of a continuous integration build chain, given that they require a human tester to execute test steps and provide test results. Performing manual or automatic test suites in every possible target environment is sometimes not practicable. Further complicating the situation, target execution will have different combinations of hardware platforms, operative systems (OS), configurations and libraries that can affect the correct functioning of the software product.

Quality Assurance aims to prevent bugs from happening on production deployment, but, given the limitations of QA practice on development time, it is necessary to have tools available in software production runtime environments to monitor activity of the running software to detect and audit execution error.

Once bugs are found in the production environment, it is sometimes complex to reproduce the exact same conditions in which the error occurred given high variability of the production environment itself. Reproduction of such errors depends heavily on an amount of information that users are willing to provide to describe conditions in which the bug was detected (which many users may feel can be privacy sensitive). Bug/error condition reports are not always accurate and vary widely based on the technical background of a user and the user's willingness to provide a detailed report.

### BRIEF DESCRIPTION OF THE DRAWINGS

FIG. 1 is a block diagram of an example quality assurance apparatus to drive improvement in software development, testing, and production.
FIG. 2 illustrates an example implementation of the recommendation engine of the example apparatus of FIG. 1.
FIG. 3 is a flowchart representative of example hardware logic, machine readable instructions, hardware implemented state machines, and/or any combination thereof for implementing the example system of FIG. 1.
FIGS. 4-5 depict example graphs of collected event data.
FIG. 6 shows an example test pyramid.
FIGS. 7-9 illustrate example output interfaces generated by the example system of FIG. 1.
FIG. 10 is a block diagram of an example processing platform structured to execute the instructions of FIG. 3 to implement the example apparatus of FIG. 1.

### DETAILED DESCRIPTION

Disclosed herein are systems, apparatus, methods, and articles of manufacture to improve quality of a software product using a machine engine that can consolidate learnings from development and testing environments and monitor a production environment to detect software defects. Certain examples provide a feedback channel from the production environment back to the testing and development environments to improve (e.g., optimize, etc.) software quality assurance and provide data to implement a continuous software improvement process.

Certain examples help to reduce cost of quality assurance for a software development organization, reduce or eliminate wasted time on ineffective quality assurance activities, and provide data to guide a software product to a data driven product development life cycle. Certain examples provide apparatus, systems, and methods to detect and analyze complex and difficult to reproduce issues, such as software aging, memory/resource leaks in software running for a long period of time, etc., and to trace the issues to specific parts of a software application in a development environment. Certain examples recommend and/or generate (e.g., depending on configuration) test cases involving important or critical parts of the software application based on monitoring real usage of the application in production. Certain examples provide comprehensive bug reproduction information specific to the production runtime platform and environment.

Certain examples provide a feedback channel to developers for continuous improvement and refactoring of software development, such as by detecting unused functionality or dead code based on usage metrics captured from execution of an application by one or more users. Certain examples identify appropriate test(s) to execute for an application and an order in which the test(s) are to be executed to improve QA success and improve utilization of resources. For example, a test execution order in which a failing test is not executed until the end of the QA process can be reordered to identify the failure earlier in the process and take action without unnecessarily executing further tests.

To improve software QA efficiency and effectiveness, certain examples provide a QA engine to collect data from the development, testing, and production environments, consolidate the data in a centralized backend, analyze the data, and generate recommendations specific to each environment regarding how to improve the effectiveness of the quality assurance activities being executed, as well as recommend quality assurance activities that should be performed to improve an overall quality of the software product.

In certain examples, metrics can be gathered from the development environment, the testing environment, and/or the production environment and provided to the QA engine. Metrics can be based on executable instructions (e.g., software, code), platform, tests, performance information, usage scenarios, etc. In certain examples, metrics are integrated into the machine engine over time based on their relevance to objective(s) associated with the software product under review.

In certain examples, an iterative analysis of the available environments (e.g., development, testing, and production environments) is performed. In an initial state, the metrics taken from the development and testing environments are used to generate a model that represents the expected behavior of the software in production. The QA engine consolidates the metrics from development and testing and generates the initial model, which serves as an initial point of comparison with an actual usage model taken from the production environment.

In some examples, a data collector is deployed with the production software. This data collector captures production metrics as the software is executed and reports the collected metrics back to the QA engine. With the new data provided by the production software, the QA engine of some examples generates a new model of the software. This new (production) model of the software is compared with the initial model based on the testing and development environments, and the QA engine computes a difference between the models. The difference represents a gap between behavior in the development and testing environments and the real behavior of the software during execution in production. The QA engine of some examples then recommends specific activities to be executed in the testing and/or development environment to reduce the gap with respect to the production environment.

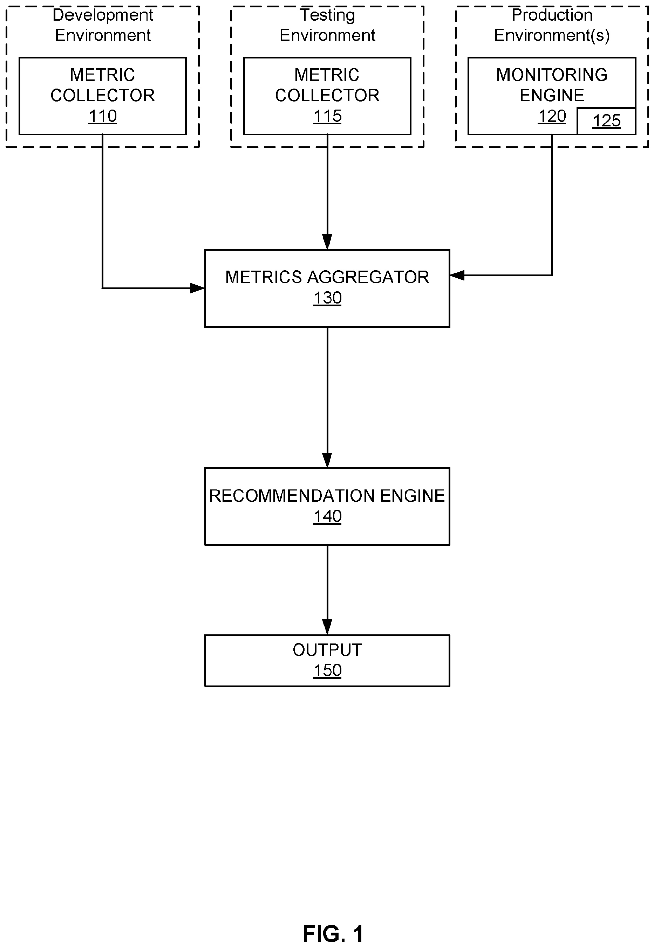

Turning to the figures, FIG. 1 is a block diagram of an example quality assurance apparatus 100 to drive improvement in software development, testing, and production. The example apparatus 100 includes metric collectors 110, 115, a monitoring engine 120, a metrics aggregator 130, and a recommendation engine 140. The metric collectors 110, 115, metrics aggregator 130, and recommendation engine 140 are to be deployed at a software development, manufacturing, and/or testing company. In particular, the first metric collector 110 is arranged in a development environment to capture metrics from development of a software application in the development environment. The second metric collector 115 is arranged in a testing environment to capture metrics from testing of the software application.

In certain examples, the monitoring engine 120 is located off site (not at the software company) at a client premises. In certain examples, the monitoring engine 120 is arranged in one or more production environments of various client(s) to monitor runtime execution of the software application once the software application has been deployed (e.g., sold, etc.) in production. The example monitoring engine 120 includes a data collector 125.

For example, in a development environment, the metric collector 110 can capture metrics relating to test coverage, code cyclomatic complexity, time spent in development tasks, time spent in quality assurance tasks, version control system information, etc. More specifically, metrics captured by the metric collector 110 can include: lines of code (LOC) for feature development; LOC for unit tests; LOC for integration testing; LOC for end-to-end testing; percentage of unit test coverage; percentage of integration test coverage; percentage of end-to-end test coverage; cyclomatic complexity metrics; time spent in feature development; time spent in test development; information from a version control system about a most modified portion of the software; etc.

In a testing environment, the metric collector 115 can capture metrics relating to a platform under test, test scenarios, bugs found over time, time spent in test scenarios, performance information of the test scenarios, etc. More specifically, metrics captured by the metric collector 115 can include: platforms under test (e.g., hardware description, operating system(s), configuration(s), etc.); test scenarios per software feature; bugs found by each test scenario over time; time spent in each test scenario execution; time spent testing each of the platforms under test; performance information gathered during test scenarios execution (e.g., memory leaks, bottlenecks in the code, hotspots in the code that consume more time during the test scenario, etc.); etc.

In the production environment(s), the monitoring engine 120 can monitor platform information, performance metrics, feature usage information, overall software usage metrics, bug reports and stack traces, logs, etc. More specifically, the monitoring engine 120 can monitor: a description of a runtime platform on which the software is running (e.g., hardware description, operative system(s), configuration(s), etc.); performance information for the running software (e.g., memory leaks, bottlenecks in the code, hotspots in the code that consume more time during software execution, etc.); usage scenarios (e.g., a ranking of features that are most used in production); metrics related to an amount of time that the software is running; metrics related to an amount of time that the features are being used; stack traces generated by software errors and/or unexpected usage scenarios; etc.

In certain examples, metrics are integrated over time based on their relevance to objective(s) associated with the software product under review.

In certain examples, such as the example of FIG. 1, there are multiple monitoring engines 120, each of which includes a respective data collector 125. In the production environment(s), the monitoring engine 120 is deployed to a corresponding private infrastructure along with the software application being monitored. The monitoring engine 120 is to capture information from the infrastructure on which it is deployed and capture information on operation of the software application in the infrastructure, for example. Since the application is deployed for execution in a private infrastructure, the data collector 125 filters personal data, confidential/secret information, and/or other sensitive information from the monitored data of the infrastructure and application execution. As such, the personal data, confidential/secret information, and/or other sensitive information is not sent back from the production environment(s). Access to data and the duration of that access can impact an accuracy of decision-making by the recommendation engine 140, for example.

In certain examples, the data collector 125 is implemented by a high availability service using an event-based architecture (e.g., Apache Kafka™, Redis clusters, etc.) to report data from log and/or other data producers asynchronously and with high performance. Using the high availability service, highly verbose logging on disk can be avoided, and consumers of the data can consume the data at their own pace while also benefiting from data filtering for privacy, etc. Due to the asynchronous mechanism of such an implementation of the data collector 125, a speed of data consumers does not affect a speed of data producers, for example.

The metrics aggregator 130 gathers metrics and other monitoring information related to the development environment, testing environment, and production runtime from the metric collectors 110, 115 and the monitoring engine 120 and consolidates the information into a combined or aggregated metrics data set to be consumed by the recommendation engine 140. For example, duplicative data can be reduced (e.g., to avoid duplication), emphasized (e.g., because the data appears more than once), etc., by the metrics aggregator 130. The metrics aggregator 130 can help ensure that the metrics and other monitoring information forming the data in the metrics data set are of consistent format, for example. The metrics aggregator 130 can weigh certain metrics above other metrics, etc., based on criterion and/or criteria from the recommendation engine 140, software type, platform type, developer preference, user request, etc.

In certain examples, the metrics aggregator 130 provides an infrastructure for data persistency as data and events change within the various environments. In certain examples, the metrics aggregator 130 is implemented using a distributed event streaming platform (e.g., Apache Kafka™, etc.) with the metric collectors 110, 115 and monitoring engine 120 capturing data from producers in each environment (development, testing, and production runtime) and with the recommendation engine 140 as a consumer of captured, consolidated, data/events.

The recommendation engine 140 processes the metrics data set from the aggregator 130 to evaluate a quality associated with the software application. The recommendation engine 140 can perform a quality assurance analysis using the metrics data set. Based on an outcome of the QA analysis, the recommendation engine 140 can generate new test case(s) for software, determine a reallocation of QA resources, prioritize features and/or platforms, suggest performance improvements, etc.

In certain examples, the recommendation engine 140 processes data from the metrics aggregator 130 to consume events occurring in the development, testing, and/or production environments. The metrics aggregator 130 combines the events and groups events by environment (e.g., development, continuous integration, testing, production, etc.). The recommendation engine 140 computes a gap between a real usage model of the production environment and an expected usage model from one or more of the non-production environments, for example. The recommendation engine 140 generates one or more recommendations (e.g., forming an output 150) to reduce the gap between the two models such as by adjusting the expected usage model closer to the real usage model of the software product.

In operation, in an initial state, the metrics collectors 110, 115 capture metrics in the development and/or testing environments, and the metrics aggregator 130 consolidates the metrics and provides the consolidated metrics in a data set to the recommendation engine 140, which generates a model that represents expected behavior of the software application in production. The model is an initial model, which serves as an initial point of comparison with an actual usage model constructed from data captured by the monitoring engine 120 in the production environment.

When the software is deployed into production, the monitoring engine 120 is deployed as a data collector component with the production software itself. The monitoring engine records and reports production metrics to the metrics aggregator 130. Using the production data, the recommendation engine 140 generates a new model of the software (e.g., a production model, also referred to as an actual usage model). The production model is compared with the initial model taken from the testing and development environments, and the recommendation engine 140 computes difference(s) between the models. The difference represents a gap between the behavior of the software in the development and/or testing environments and the software executing after product release (e.g., on a customer premises, etc.). The recommendation engine 140 then recommends specific activities to be executed in the testing and/or development environment to reduce the identified gap with the production environment, for example.

In certain examples, the metric collector 110 is deployed in the development environment as a plugin in an Integrated Development Environment (IDE) and/or other code editor to collect metrics from one or more developer workstations. The metric collector 110 can collect metrics to calculate the time and/or effort of the respective developer(s) given to feature development, test case creation, other development tasks (e.g., building, debugging, etc.), etc. Such metrics enable the recommendation engine 140 to create an accurate representation of how time and/or effort are distributed among QA and non-QA activities in a software development organization, for example.

In certain examples, the metric collector 115 is deployed in the testing environment as part of a test suite of applications and triggers in a controlled testing environment. In the testing environment, test scenarios are to be designed to cover the most important parts of a software application while reducing investment of time and effort involved in QA. Software usage analytics can be used by the metric collector 115 to report metrics for each test scenario executed in the testing environment. The metrics can be used to compare the testing effort in the test environment with usage metrics captured by the monitoring engine 120 from the production environment. The test scenario metrics can also be combined with metrics related to an amount of testing scenarios executed per platform to be used by the recommendation engine 140 to provide a more accurate recommendation for improved software application quality assurance.

Software usage analytics (SUA) collect, analyze, present, and visualize data related to the use of software applications. SUA can be used to understand the adoption of specific features, user engagement, product lifecycles, computing environments, etc. In certain examples, software usage analytics are used by the metrics collectors 110, 115 and monitoring engine 120 to collect metrics about the software running in the different environments (e.g., development/continuous integration, testing and production), and the metrics are consolidated by the metrics aggregator 130 for further processing by the recommendation engine 140. The recommendation engine 140 uses the information to detect allocation of QA resources and compare the resource allocation to real or actual usage of the software in production environments. For example, test scenarios may be exercising certain parts of application code, but it is different parts of the application's code that are being most utilized in execution on a production platform. Additionally, metadata such as platform information (e.g., operative system, hardware information, etc.) can be collected by the monitoring engine 120 and reported to the recommendation engine 140 via the metrics aggregator 130, for example. In certain examples, collection of SUA metrics involves modification of the source code of the software product to include calls to a SUA framework included in the metric collector 110, 115 and/or the monitoring engine 120.

In certain examples, a version control system can be queried by the metric collector(s) 110, 115 and/or the monitoring engine 120 to extract information regarding most commonly modified files in a software code base, changes to source code, changes to documentation, changes to configuration files, etc. In certain examples, the version control system can provide metadata such as an author of a change, a date on which the change was introduced into the software, person(s) who reviewed, approved and/or tested the change, etc. The version control information can be used to associate software defects information extracted from the testing and production environments with changes in the software code base performed in the development environment, for example.

In the production environment, the users install the software product in a runtime platform and use the software application to solve specific use cases. Execution is monitored by the monitoring engine 120. In the production runtime environment, software usage analytics can be leveraged. For each production runtime, a SUA framework implemented in the monitoring engine 120 captures usage metrics and metadata (e.g., operative system, hardware information, etc.) and forwards the same to the metrics aggregator 130 to be processed by the recommendation engine 140. In the event of a software failure, a stack trace describing the error can be combined with SUA events to provide an improved bug reporting artifact, which includes a description of the error in the stack trace, actions to reproduce the error, and platform metadata from the SUA framework of the monitoring engine 120. The monitoring engine 120 running in the production runtime is also able to capture software defects that are very difficult to reproduce in the testing environments, such as errors caused by software aging and/or resource leaks. The monitoring engine 130 can also provide information about how to reproduce such conditions using the SUA framework.

In certain examples, continuous integration practices (e.g., Jenkins, Teamcity, Travis CI, etc.) help the software development process to prevent software integration problems. A continuous integration environment provides metrics such as automated code coverage for unit tests, integration tests and end-to-end tests, cyclomatic complexity metrics, and different metrics from static analysis tools (e.g., code style issues, automatic bug finders, etc.), for example. End-to-end test execution combined with metrics from the software usage analytics framework, for example, provide insight into an amount of test cases executed per feature in the continuous integration environment. Other metrics related to performance (e.g., memory usage, bottleneck detection) can also be provided and captured by one or more of the metric collector 110, metric collector 115, and monitoring engine 120, depending on the environment or phase in which the performance occurs, for example.

Based on the consolidated metrics, event data, etc., the recommendation engine 140 provides one or more actionable recommendations for execution in one or more of the environments to improve model accuracy and associated quality assurance, resource utilization, etc., for software application development, testing, and deployment. Recommendations generated by the recommendation engine 140 to close a gap between an expected usage model of a software application and an actual usage model of the software application include recommendations to change one or more operation, test, function, and/or structure in the development environment and/or the testing environment.

The recommendation engine 140 can provide output 150 including actionable recommendation(s) for the development environment. An example actionable recommendation for the development environment includes applying software refactorization to system components that are most used in production and have the greatest cyclamate complexity metrics. An example actionable recommendation for the development environment includes increasing unit testing, integration testing, and/or end-to-end testing in parts that are widely used in production. An example actionable recommendation for the development environment includes increasing unit testing, integration testing, and/or end-to-end testing in parts that fail the most in production. An example actionable recommendation for the development environment includes increasing effort to support platforms that are widely used in production. An example actionable recommendation for the development environment includes reducing or eliminating effort spent on features that are not used in production. An example actionable recommendation for the development environment includes reducing or eliminating effort spent on supporting platforms that are not used in production. The recommendation engine 140 can trigger notification and implementation of one or more of these recommendations in the development environment, for example.

The recommendation engine 140 can provide output 150 including actionable recommendation(s) for the testing environment. An example actionable recommendation for the testing environment includes expanding a test suite to exercise features that are widely used in production and are not currently covered by the test suite. An example actionable recommendation for the testing environment includes removing test scenarios that do not exercise features used in production. An example actionable recommendation for the testing environment includes increasing test scenarios for features that fail the most in production. An example actionable recommendation for the testing environment includes increasing efforts to test platforms that are widely used in production. An example actionable recommendation for the testing environment includes reducing or eliminating efforts to test platforms that are not used in production. The recommendation engine 140 can trigger notification and implementation of one or more of these recommendations in the testing environment, for example.

Once one or more of these recommendations are applied in each of the target environments, a new version of the software application can be deployed. This new version of the software application is used to generate a new real usage model, updated with information from the latest features and platforms. With this new data and new model, the recommendation engine 140 can calculate a new gap to solve, and provide recommendations to address that updated gap, if any. The metric collectors 110-115 and monitoring engine 120 can continue to gather data, and the recommendation engine 140 can continue to model and analyze the data to try and minimize or otherwise reduce the gap between expected and actual software usage models based on available resources. This process may be repeated throughout the lifecycle of the software until the software application is disposed and/or retired and there is no more need for maintenance of the software application, for example.

For example, a software application is developed including features A and B. In the development environment, the metric collector 110 captures test results indicating a 90% test coverage of feature A and a 50% coverage of feature B. In the test environment, the metric collector 115 captures test results for test scenarios conducted for feature A (e.g., 10 test scenarios for feature A, etc.) and test scenarios conducted for feature B (e.g., 5 test scenarios for feature B, etc.). The tests can be conducted using a plurality of operating/operative systems, such as Canonical Ubuntu™, Microsoft Windows™, Red Hat Fedora, etc. Upon production, in this example, the software application is installed 70% of the time on machines running Red Hat Enterprise operating system and 30% on machines running Ubuntu. This information is captured by the monitoring engine 120 (e.g., using the data collector 125). In production, in this example, the monitoring engine 120 captures that feature B is used 40% of the time, and feature A is only used 10% of the time during a normal software execution. In this example, the monitoring engine 120 captures that feature B failed 10 times during the last week of runtime execution, while feature A did not fail in any of the executions.

In the above example, such data is provided to the metrics aggregator 130, processed, and then conveyed to the recommendation engine 140 for processing. A gap between a model generated by the recommendation engine 140 using data from the development and testing environments and a new model generated by the recommendation engine 140 using data from the production scenario is determined by the recommendation engine 140. The recommendation engine 140 recommends, and initiates, actions to address the identified gap.

In the above example, the recommendation engine 140 generates corrective recommendations for one or both of the development environment and the testing environment. For example, in the development environment, the recommendation engine 140 may generate an actionable recommendation to reduce testing of feature A and increase testing of feature B. The recommendation can trigger an automated adjustment in testing of features A and B to increase testing of feature B while reducing testing of feature A (e.g., shifting from a 90% test coverage of feature A and a 50% coverage of feature B to a 70% test coverage in feature A and a 70% coverage on feature B, etc.), for example.

In the testing environment of the above example, the recommendation engine 140 may generate an actionable recommendation to add Red Hat as a target platform to be tested and drop efforts to test Windows™-based platforms. The recommendation can drive additional test scenarios to allow feature B to exercise its functionality. Test scenarios for features A, which execute edge cases that do not have any impact on the production system, should not be executed according to the actionable recommendation from the engine 140, for example.

The actionable recommendation(s) and/or other corrective action(s) generated as output 150 by the recommendation engine 140 are applied in the development and/or testing environments to reduce (e.g., minimize, etc.) the gap between the initial model and the production model of the software application. An improved expected model (e.g., a substitute for the initial model) is generated by the recommendation engine 140. A new version of the application is deployed in response to the corrections driven by the recommendation engine 140. The recommendation engine 140 generates a new actual usage model for the updated software application and compares the new expected and actual models to determine whether a gap remains. The recommendation engine 140 can then evaluate whether the corrective actions taken were effective or if new corrective action is to be performed. This cycle can continue for the life of the software application until it is dispositioned, for example.

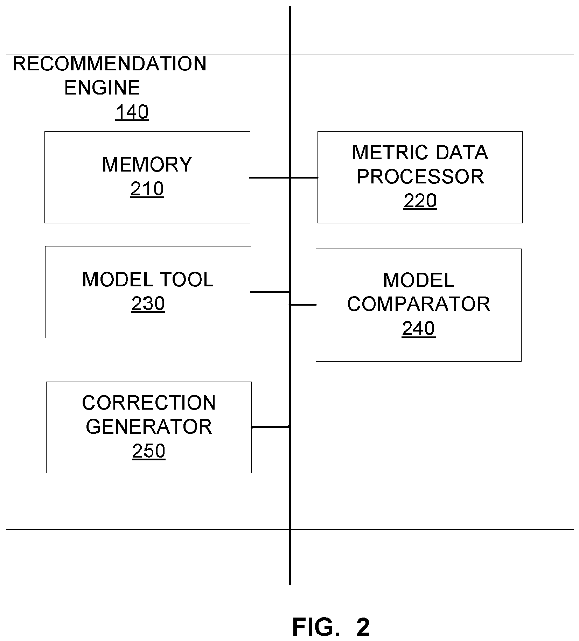

FIG. 2 illustrates an example implementation of the recommendation engine 140 of the example apparatus 100 of FIG. 1. The example recommendation engine 140 includes memory 210, a metric data processor 220, a model tool 230, a model comparator 240, and a correction generator 250. The recommendation engine 140 receives consolidated metrics from the metrics aggregator 130 and stores the metrics in memory 210. The metric data processor 220 processes the metrics, and the model tool 230 uses the metrics and associated analysis to build model(s) of software application usage.

For example, the consolidated metrics obtained from the metric collectors 110, 115 of the development and testing environments can be processed by the metric data processor 220 to understand the metrics, which can then be used by the model tool 230 to generate a model of expected software application usage. Thus, based on metrics gathered from application development and testing, the model tool 230 can generate a model of how a user (e.g., a processor, software, and/or human user, etc.) is expected to use the software application. Additionally, consolidated metrics obtained from the monitoring engine 120 of the production runtime environment are stored in memory 210, processed by the metric data processor 220, and used by the model tool 230 to generate a model of actual software application usage. Thus, based on metrics gathered from actual application usage, the model tool 230 can generate a model of how a user (e.g., a processor, software, and/or human user, etc.) is actually using the software application.

The model comparator 240 compares the model of expected software application usage and the model of actual software application usage (both of which are constructed by the model tool 230) to identify a difference or gap between expected and actual usage of the software. The correction generator 250 can generate one or more actionable recommendations as output 150 to adjust testing, provide an automated testing suite and/or automated QA, and/or alter other behavior, conditions, and/or features in the development environment and/or the testing environment, for example.

In certain examples, the example model tool 230 of the recommendation engine 140 implements the software usage models using artificial intelligence. Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of ML models and/or ML architectures exist. In examples disclosed herein, a neural network model is used to form part of the model tool 230. In general, ML models/architectures that are suitable to use in the example approaches disclosed herein include semi-supervised ML. However, other types of ML models could additionally or alternatively be used.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the ML model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the ML model (e.g., a classification, an expected output value, etc.). Alternatively, unsupervised training (e.g., used in DL, a subset of ML, etc.) involves inferring patterns from inputs to select parameters for the ML/AI model (e.g., without the benefit of expected (e.g., labeled) outputs).

In examples disclosed herein, ML/AI models are trained using stochastic gradient descent. However, any other training algorithm may additionally or alternatively be used. In examples disclosed herein, training is performed until an acceptable amount of error is achieved. In examples disclosed herein, training is performed at remotely for example, at a data center and/or via cloud-based operation. Training is performed using hyperparameters that control how the learning is performed (e.g., a learning rate, a number of layers to be used in the ML model, etc.).

Training is performed using training data. In examples disclosed herein, the training data is locally generated data that originates from a demonstration of a task by a human. Once training is complete, the model is deployed for use as an executable construct that processes an input and provides an output based on the network of nodes and connections defined in the model.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the ML model. Also, in some examples, the output data may undergo post-processing after being generated by the AI model to transform the output into a useful result (e.g., a display of data, an instruction to be executed by a machine, etc.).

In some examples, output of the deployed model may be captured and provided as feedback to gauge model accuracy, effectiveness, applicability, etc. For example, by analyzing the feedback, an accuracy of the deployed model can be determined by the model tool 230. If the feedback indicates that the accuracy of the deployed model is less than a threshold or other criterion, training of an updated model can be triggered by the model tool 230 using the feedback and an updated training data set, hyperparameters, etc., to generate an updated, deployed model, for example.

While example manners of implementing the example system 100 are illustrated in FIGS. 1-2, one or more of the elements, processes, and/or devices illustrated in FIGS. 1-2 may be combined, divided, re-arranged, omitted, eliminated, and/or implemented in any other way. Further, the example metric collector 110, the example metric collector 115, the example monitoring engine 120, the example data collector 125, the example metrics aggregator 130, the example recommendation engine 140, the example memory 210, the example metric data processor 220, the example model tool 230, the example model comparator 240, the example correction generator 250, and/or, more generally, the example system 100 can be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)). When reading any of the apparatus or system claims of this patent to cover a purely software and/or firmware implementation, at least one of the example metric collector 110, the example metric collector 115, the example monitoring engine 120, the example data collector 125, the example metrics aggregator 130, the example recommendation engine 140, the example memory 210, the example metric data processor 220, the example model tool 230, the example model comparator 240, the example correction generator 250, and/or, more generally, the example system 100 are hereby expressly defined to include a non-transitory computer readable storage device or storage disk such as a memory, a digital versatile disk (DVD), a compact disk (CD), a Blu-ray disk, etc. including the software and/or firmware. Further still, the example metric collector 110, the example metric collector 115, the example monitoring engine 120, the example data collector 125, the example metrics aggregator 130, the example recommendation engine 140, the example memory 210, the example metric data processor 220, the example model tool 230, the example model comparator 240, the example correction generator 250, and/or, more generally, the example system 100 of FIG. 1 may include one or more elements, processes, and/or devices in addition to, or instead of, those illustrated in FIG. 1, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

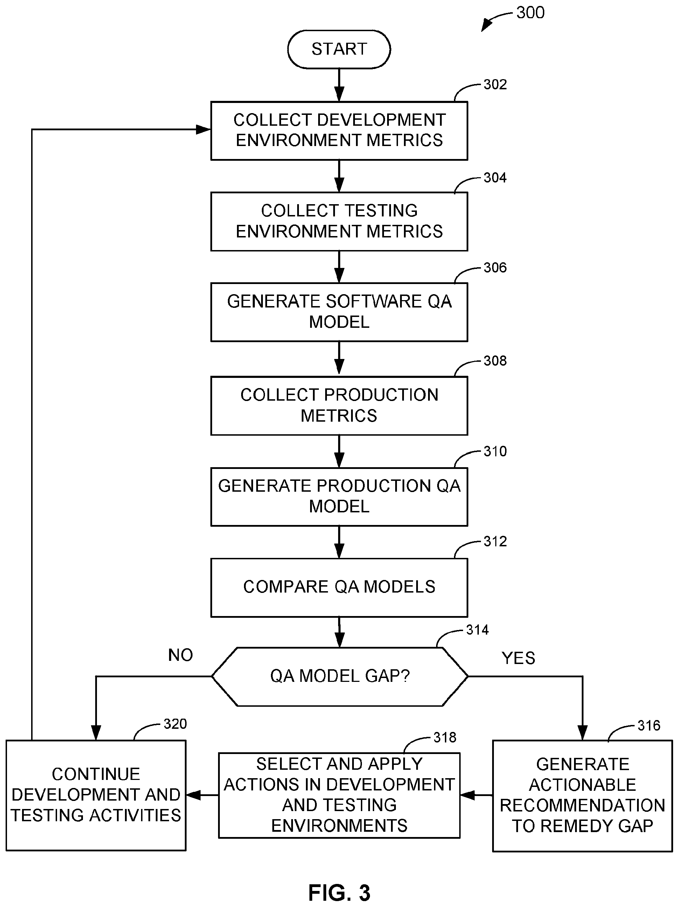

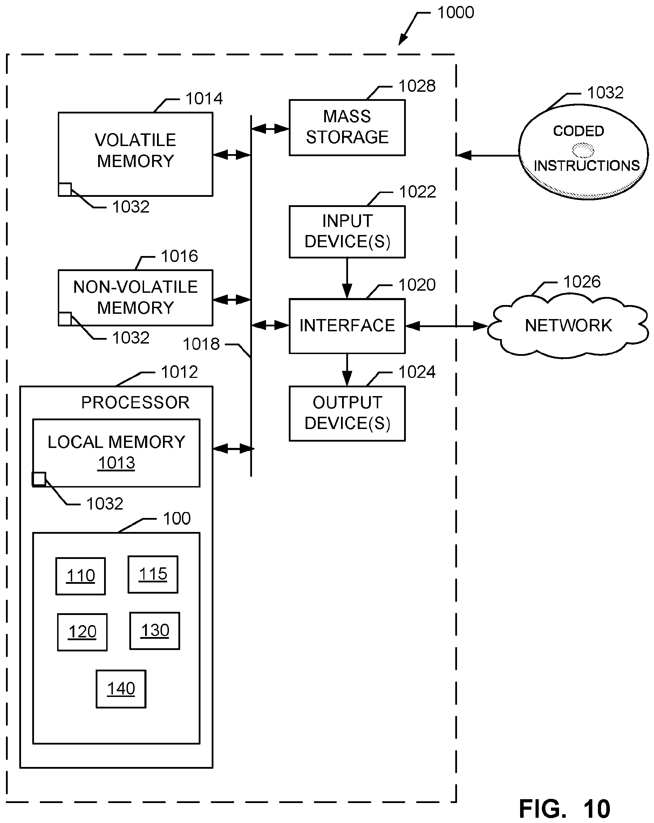

A flowchart representative of example hardware logic, machine readable instructions, hardware implemented state machines, and/or any combination thereof for implementing the example system 100 of FIG. 1 is shown in FIG. 3. The machine readable instructions may be one or more executable programs or portion(s) of an executable program for execution by a computer processor such as the processor 1012 shown in the example processor platform 1000 discussed below in connection with FIG. 10. The program may be embodied in software stored on a non-transitory computer readable storage medium such as a CD-ROM, a floppy disk, a hard drive, a DVD, a Blu-ray disk, or a memory associated with the processor 1012, but the entire program and/or parts thereof could alternatively be executed by a device other than the processor 1012 and/or embodied in firmware or dedicated hardware.

Further, although the example program is described with reference to the flowchart illustrated in FIG. 3, many other methods of implementing the example system 100 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device, and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example process(es) of FIG. 3 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory, and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects, and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities, and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

Descriptors "first," "second," "third," etc. are used herein when identifying multiple elements or components which may be referred to separately. Unless otherwise specified or understood based on their context of use, such descriptors are not intended to impute any meaning of priority, physical order, arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

FIG. 3 illustrates a process or method 300 implemented by executing program instructions to drive the example system 100 to improve software application development, analysis, and quality assurance. The example program 300 includes instructing the metric collector 110 to collect metrics from a development environment associated with development (e.g., coding, etc.) of a software application (block 302). For example, the metric collector 110 can measure metrics related to software development including test coverage, code cyclomatic complexity, time spent in development tasks, time spent in quality assurance tasks, version control system information, etc. More specifically, metrics captured by the metric collector 110 can include: lines of code (LOC) for feature development; LOC for unit tests; LOC for integration testing; LOC for end-to-end testing; percentage of unit test coverage; percentage of integration test coverage; percentage of end-to-end test coverage; cyclomatic complexity metrics; time spent in feature development; time spent in test development; information from a version control system about a most modified portion of the software; etc.

The example program 300 includes collecting metrics from a testing environment using the metric collector 115 (block 304). For example, the metric collector 115 can capture metrics relating to a platform under test, test scenarios, bugs found over time, time spent in test scenarios, performance information of the test scenarios, etc. More specifically, metrics captured by the metric collector 115 can include: platforms under test (e.g., hardware description, operative system(s), configuration(s), etc.); test scenarios per software feature; bugs found by each test scenario over time; time spent in each test scenario execution; time spent testing each of the platforms under test; performance information gathered during test scenarios execution (e.g., memory leaks, bottlenecks in the code, hotspots in the code that consume more time during the test scenario, etc.); etc.

The recommendation engine 140 executes the example program 300 to generate a software quality assurance model of the software application under development and testing (block 306). For example, the metrics aggregator 130 combines events captured by the metric collectors 110, 115 and provides the aggregated event data to the recommendation engine 140 for processing to generate the output 150 including one or more actionable recommendations. The metrics aggregator 130 can store the consolidated data in a multidimensional database (MDB), for example, to allow the collected events to persist for analysis and modeling by the recommendation engine 140. The MDB can be implemented in the memory 210 of the recommendation engine 140, for example. The example metric data processor 220 of the recommendation engine 140 processes the event data from memory 210 and provides the processed data to the model tool 230, which generates a QA model of the software application under development/test.

According to the example program 300, production metrics are collected by the monitoring engine 120 in a production environment from runtime execution of the software application once the software application has been deployed in production (block 308). For example, the monitoring engine 120 can monitor platform information, performance metrics, feature usage information, overall software usage metrics, bug reports and stack traces, logs, etc., in the production environment. More specifically, the monitoring engine 120 can monitor: a description of a runtime platform on which the software is running (e.g., hardware description, operative system(s), configuration(s), etc.); performance information for the running software (e.g., memory leaks, bottlenecks in the code, hotspots in the code that consume more time during software execution, etc.); usage scenarios (e.g., a ranking of features that are most used in production); metrics related to an amount of time that the software is running; metrics related to an amount of time that the features are being used; stack traces generated by software errors and/or unexpected usage scenarios; etc.

The example program 300 includes generating, using the recommendation engine 140, a production quality assurance model of the software application (block 310). For example, the metrics aggregator 130 combines events captured by the monitoring engine 120 (e.g., via its data collector 125, etc.) and provides the aggregated event data to the recommendation engine 140 for processing to generate the output 150 including one or more actionable recommendations. The metrics aggregator 130 can store the consolidated data in a multidimensional database (MDB), which can be implemented in and/or separately from the memory 210 of the recommendation engine, for example, to allow the collected events to persist for analysis and modeling by the recommendation engine 140. The example metric data processor 220 of the recommendation engine 140 processes the event data from memory 210 and provides the processed data to the model tool 230, which generates a QA model of the software application being executed at runtime in production, for example.

According to the program 300, the recommendation engine 140 compares the production QA model of the software application with the initial QA model of the software application (block 312). For example, features of the production model are compared by the model comparator 240 of the recommendation engine 140 to identify a difference or gap between the models.

The program 300 includes the recommendation engine 140 determining whether a gap or difference exists between the QA models (block 314). If a gap exists, then, the example program 300 includes generating, using the correction generator 250 of the recommendation engine 140, for example, actionable recommendation(s) 150 to reduce, close, and/or otherwise remedy the gap between the models (block 316). For example, the correction generator 250 of the recommendation engine 140 applies business intelligence to the content in the MDB to draw conclusions regarding effectiveness of the current QA process and generate recommended actions to improve the QA. Such actions can be automatically implemented and/or implemented once approved (e.g., by software, hardware, user, etc.), for example. The example program 300 includes applying action(s) in the detection and/or testing environments (block 318). The example program 300 includes, when no QA model gap is identified or when action(s) are applied in the detection and/or testing environments, continuing to monitor development and testing activities for the lifecycle of the software application (block 320).

In certain examples, using the example program 300, metrics collected by the metric collector 110, 115 and/or the monitoring engine 120 can be in the form of events generated by the development environment, the testing environment, and/or the production environment. An event can be represented as follows: (SessionID, Timestamp, Environment, Module, Functionality, Metadata), for example. In this example, SessionID identifies a usage session of the software application. The timestamp indicates a date and time when the event was generated. The environment variable classifies and/or otherwise identifies the environment in which the event was generated, such as development, unit testing, integration testing, end to end testing, testing, production, etc. The module identifies a software module used with respect to the software application (e.g., Help, User, Project, etc.). Functionality indicates functionality in the software module being used (e.g., Help:Open, Help:Close, User:Login, User:Logout, etc.). Metadata identifies additional data that can aid in metrics processing (e.g., Geolocation, TriggeredBy, etc.).

To instrument the source code of the software application to obtain an accurate event collection from the different environments, instrumentation can be achieved using a module for Software Usage Analytics (SUA) that provides a sendEvent() method, for example. Each time that a relevant method is called, the sendEvent() call generates a software usage event that is collected by the metric collector 110, 115, for example. An example of this is shown below in pseudocode:

```
       Import Analytics
        Class User {
         Function Login(user, password) {
           Analytics.sendEvent("User", "Login")
           // Regular login code below
         }
      }
```

In this example above, the SessionID, Timestamp, Environment, and Metadata fields are automatically populated by the Analytics module. In other examples, this instrumentation can be implemented in a less intrusive manner by using an object oriented design pattern such as Decorator Pattern, etc.

For each automated testing type, a test coverage report is captured by the metric collector 110, 115. The test coverage report can be taken from the continuous integration environment that executes each of the test suites. The metric collector 110, 115 processes the test coverage report to convert test coverage metrics for Modules/Classes and Methods into events to be sent to the metrics aggregator 130. In certain examples, two additional fields of an event prototype are added to identify the test suite and the test case that generated the coverage event: (SessionID, Timestamp, Environment, Module, Functionality, TestSuite, TestCase, Metadata). In this example, the Environment is UnitTesting, IntegrationTesting, EndToEndTesting, etc. The TestSuite indicates a name of the test suite, and TestCase indicates a name of the test case, for example.

Examples of automated testing events include:
(1, 1, UnitTesting, User, Login, UserTestSuite, LoginTestCase, {Coverage: 10%});
(2, 10, UnitTesting, User, Logout, UserTestSuite, LogoutTestCase, {Coverage: 15%});
(3, 100, IntegrationTesting, User, Login, UserTestSuite, LoginTestCase, {Coverage: 80%}); and
(4, 1000, EndToEndTesting, User, Logout, UserTestSuite, LogoutTestCase, {Coverage: 0%}).

In certain examples, unit test and integration test validate how the implemented source code and component interactions behave with a set of inputs in a controlled environment. End-to-end testing suites provide automated tests of "real" usage scenarios. For end-to-end testing, usage metrics can also be sent to the metrics collector 110, 115, in addition to the coverage metrics. Examples of end-to-end testing events include:
(1, 1, EndToEndTesting, User, Login, UserTestSuite, UserActionTestCase);
(1, 2, EndToEndTesting, User, Profile, UserTestSuite, UserActionTestCase); and
(1, 3, EndToEndTesting, User, Logout, UserTestSuite, UserActionTestCase).

In the testing environments, QA professionals are executing the software application product in a cloned production environment and executing test sessions against the application. The test sessions can include a set of organized and reproducible actions to validate program functionality in the software application. Each time a test session is executed, the software application sends usage metrics to the metrics collector 115 when the functionality is executed in the testing environment. The tests are similar to the end-to-end tests but are not automated for different reasons (e.g., they are difficult to automate, they validate functionality that cannot be automatically tested such as user experience, or they can be automated but there is no time to do so, etc.). Examples of manual testing events include:
(1, 1, Testing, User, Login, UserTestSuite, UserActionTestCase);
(1, 2, Testing, User, Profile, UserTestSuite, UserActionTestCase); and
(1, 3, Testing, User, Logout, UserTestSuite, UserActionTestCase).

In production, the software application is executing "as usual" (e.g., as intended when deployed to a user, etc.), with instrumented modules and features sending usage events to the monitoring engine 120 (e.g., via its data collector 125 to filter out privacy-protected information) based on user actions. In certain examples, runtime execution data from a plurality of software application deployments can be measured by one or more monitoring engines 120 and consolidated by the metrics aggregator 130, resulting in a large data set of events from multiple sources. Example of production runtime events include:
(1, 1, Production, User, Login);
(1, 2, Production, Help, Open);
(1, 3, Production, Help, Close); and
(1, 4, Production, User, Profile).

In certain examples, the events from the different environments are consolidated by the metrics aggregator 130 from the metric collectors 110, 115 and the monitoring engine 120. The multidimensional data base (MDB) can be created (e.g., in memory 210 of the recommendation engine 140, etc.) to allow a record of the events to persist. The MDB allows the recommendation engine 140 to have insight into what is happening in the production environment, as well as an effectiveness of the QA process implemented by the software development organization.

The recommendation engine 140 and its metric data processor 220 analyze the data in the MDB, and, such as by using business intelligence techniques, draw conclusions from the current effectiveness of the QA process to model development, testing, and production of the software application. The correction generator 250 of the recommendation engine 140 provides actionable recommendations to improve development and/or testing, resulting in improved production.

The following examples describe two recommendation processes for prototypical QA scenarios: Test Effectiveness and New Test Creation. For an example test effectiveness analysis, the recommendation engine 140 evaluates a current expected usage model (formed from data captured in testing and development) and determines similarity with a real usage model (formed from data captured production). For example, a dataset of events consolidated by the metrics aggregator 130 can include:

| Environment | Module | Functionality | Test Suite | Test Case |
|---|---|---|---|---|
| UnitTesting | User | Login | UserSuite | LoginTest |
| IntegrationTesting | User | Logout | UserSuite | LogoutTest |
| EndToEndTesting | User | Logout | UserSuite | LogoutTest |
| EndToEndTesting | User | Logout | UserSuite | LogoutTest |
| EndToEndTesting | User | Login | UserSuite | LoginTest |
| Testing | User | Login | UserSuite | LoginTest |
| Testing | User | Login | UserSuite | LoginTest |
| Production | User | Login | N/A | N/A |
| Production | User | Update | N/A | N/A |
| Production | User | Update | N/A | N/A |
| Production | User | Update | N/A | N/A |
| Production | User | Logout | N/A | N/A |
| Production | User | Logout | N/A | N/A |

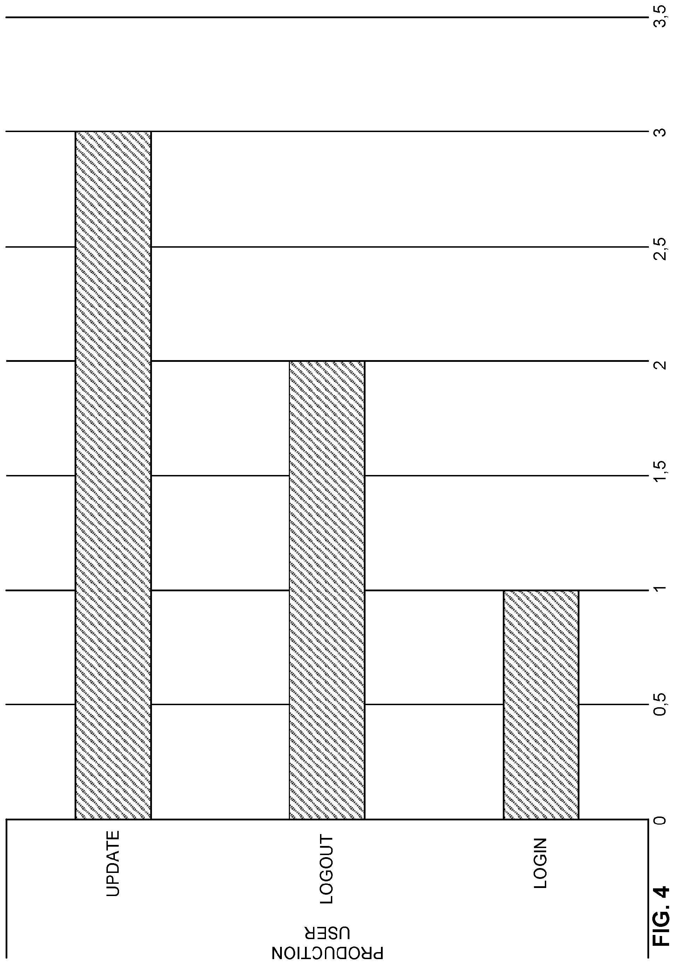

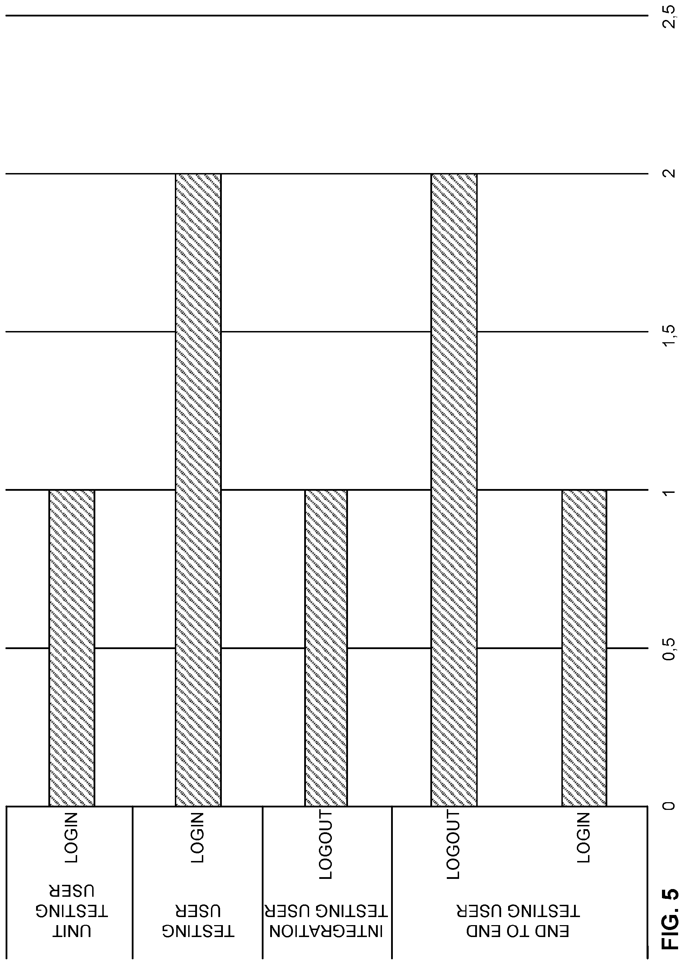

By grouping events from the production environment, the recommendation engine 140 can calculate the real usage model. FIG. 4 depicts an example graph showing a count of events by Module/Functionality from a software application in production. The model tool 230 uses the events and their respective occurrence counts to generate a model of software application QA in production. The model tool 230 can also calculate the expected usage model taken from the development and testing environment events. FIG. 5 depicts an example graph showing a count of events by test from a software application under test. The model comparator 240 can then determine a gap of difference between the real usage model and the expected usage model.

Based on the data in the examples of FIGS. 4-5, the recommendation engine 140 and its model comparator 240 deduce that User:Update functionality is of critical importance to the software application but is not properly tested; User:Login and User:Logout functionality are equally tested; User:Logout functionality is more used but its testing effort is undersubscribed; and User:Login functionality is less used but its testing effort is oversubscribed, for example. These are problems with the current QA process that have now been identified by the recommendation engine 140. The recommendation engine 150 can calculate recommendations using the correction generator 250 to adjust the development and/or testing QA process(es) to improve the QA.

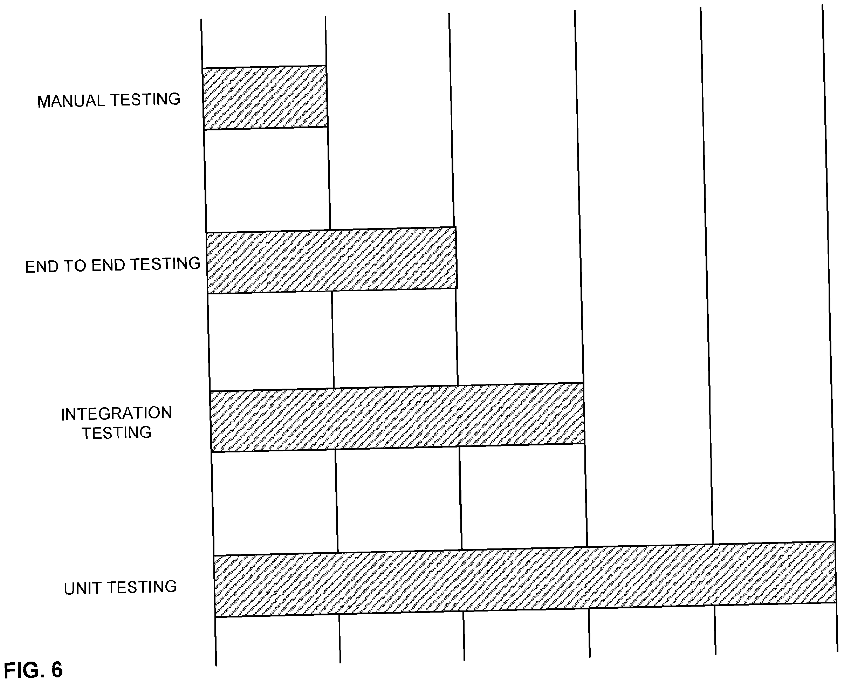

The correction generator 250 of the recommendation engine 140 can consider a plurality of factors when generating a corrective action and/or other actionable recommendation. For example, the correction generator 250 can consider test type ratio and test type cost when determining a next action. The test type ratio specifies how the testing effort should be distributed between different test types (e.g., Unit, Integration, end-to-end, manual testing, etc.). The test type ratio can be defined by a test pyramid. The test pyramid shows that most of the effort in a QA process should be done in the automated unit testing area, following by a good amount of effort in the integration testing area, a reduced effort in end-to-end testing, and the least possible effort in manual testing (see, e.g., FIG. 6). The recommendation engine 140 and its correction generator 250 factors in the test pyramid to recommend specific actions to be implemented in each of the testing areas with the objective to keep a healthy QA process, for example. Additionally, the cost of a test (the test type cost) can be represented by the sum of the cost of creating the test plus the cost of executing the test. Below, the respective cost of each of the test types is summarized:
1. Unit Test: Low Creation Cost + Low Execution Cost
2. Integration Test: Medium Creation Cost + Medium Execution Cost
3. End to End Test: High Creation Cost + High Execution Cost
4. Manual Test: Very Low Creation Cost + Very High Execution Cost

In certain examples, the Creation Cost is determined from an amount of time that a developer or QA professional dedicates to initially create this type of test. Manual tests have a very low creation cost, given that they only need to be specified as a set of steps, and a very high execution cost, given that it can take a person several minutes to run one of these manual test suites. For an automated test, the cost of creation is the amount of time that a developer allocates to write the test in a reliable way. A more complex test such as an end-to-end test takes more time to implement than a simple test such as a unit test. For the execution cost, an associated metric is a time and resource that a machine uses to execute the test. For example, a unit test (low cost) runs in milliseconds, while an end-to-end test take minutes or hours to execute (higher cost).

Based on the Test Type Ratio and Test Type Cost, the correction generator 250 of the recommendation engine 140 can generate and recommend specific actions to improve a test plan, for example. An example set of actionable recommendations for this example includes:
1. Add 1 Manual Test for the User:Update functionality.
2. Add 2 End to End Test for the User:Update functionality.
3. Add 3 Integration Test for the User:Update functionality.
4. Add 5 Unit Tests for the User:Update functionality.
5. Remove one UserSuite:LoginTest from the manual Testing environment.
6. Add one new test in the manual Testing environment for User:Logout functionality

In certain examples, all of the actionable recommendations from the recommendation engine are implemented to improve the QA process. In other examples, the actionable recommendations are balanced against economic factors associated with the actions. In such examples, to maximize the return over investment of the QA process, the recommendation engine 140 can prioritize recommendations based on an associated implementation cost and an impact on the final software application product. Once the actionable recommendations are prioritized, the recommendation engine 140 can use the Pareto principle, for example, to recommend the top 20% of the possible recommendations to be implemented. In this example, the top 20% of the recommendations are:
1. Add 2 End to End Test for the User:Update functionality
2. Remove one UserSuite:LoginTest from the manual Testing environment The two recommendations are implemented to develop, test, and release a new version of the software application product. With this new version, a new set of metrics from development, testing and production environments are captured, and new expected and real usage models can be calculated. The same process is applied to this new data set to recommend new improvements in the QA cycle.

In certain examples, additional metrics can be added to the recommendation engine 140 for consideration in the recommendation prioritization process. For example, a cyclomatic complexity of modules and functionality in the software code can be combined with usage metrics to propose refactorization of modules that are most used in production, and, by extension, more critical for users. Information about crashes given by stack traces can be added to prioritize testing efforts in features that are most used and fail the most in production, for example. Performance metrics can be added to improve performance of modules that are more critical in production and accept lower performance on modules that are sporadically used, for example.

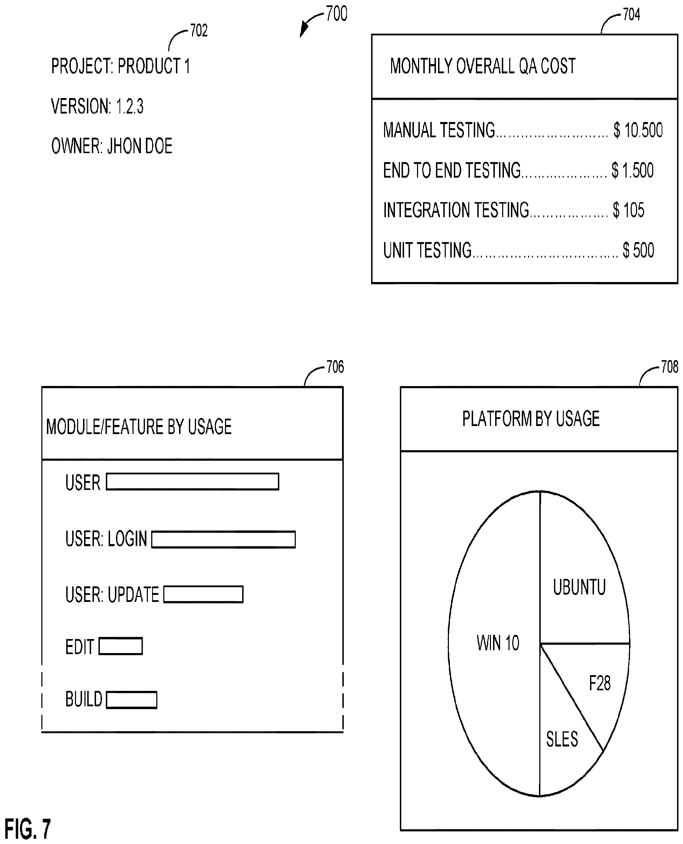

In certain examples, the recommendation engine 140 provides a visualization (e.g., via the correction generator 250 as part of the output 150, etc.) of events, associated metrics, performance analysis, recommendations, etc. For example, FIG. 7 illustrates an example analysis summary dashboard 700 providing a summary of a quality state of a software application product. In the example report 700 of FIG. 7, metadata 702 about the software application project is provided, such as product, version, product owner, etc. The example dashboard 700 also provides an estimation 704 of the current cost of the QA process. The cost estimate is based on a consolidation of each test case by type executed for the software application product with an associated cost of creation, maintenance, and execution for each test type. For example, manual testing has a low creation cost and high execution cost, and unit testing has a low creation cost and a low execution cost. Further, the example dashboard 700 provides a visualization of a summary 706 of components and features most used in the software application, which can be organized in the form <Component>:<Feature>, for example. A default view includes a list of components (e.g., user, edit, build, etc.), and a length of an associated bar corresponds to a number of usage events received by the metric collector 110, 115 from software usage analytics. In the example of FIG. 7, a drill down is included for the User component to illustrate usage metrics for features in the User component (e.g., login, update, etc.). For each feature, a length of a bar associated with the feature corresponds to an amount of usage events received for that feature. The example dashboard 700 also provides a summary 708 of different platforms on which the software application is used in production. Based on a size of a segment in the example pie chart, Win 10 is a preferred platform, while CentOS is not used at all (does not appear in the chart). This visualization 708 can help determine where to invest testing effort per platform, for example.

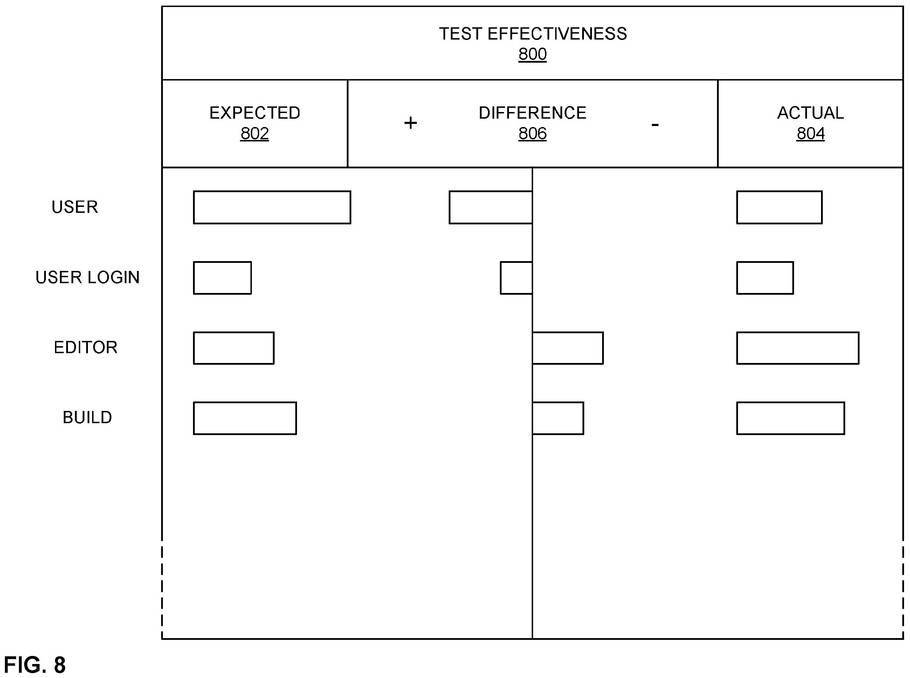

FIG. 8 depicts an example test effectiveness dashboard interface 800. The example interface 800 provides a comparison of the expected usage model 802 and the actual usage model 804, as well as a positive or negative difference 806 between the models. The actual usage model 804 is calculated based on usage events gathered from the production environment. The length of the bar for each component (user, editor, build) represents how often the <Component>, or the <Component>:<Feature> is used in executing the software application, for example. The expected usage model 802 is calculated based on testing events produced by the different test suites and cases for each of the <Components>:<Features>. For example, the user component is widely tested by different test suites (e.g., manual, integration, unit, etc.), and the editor component is tested in a smaller amount compared to the user component. A user can also drill down into features for each component, such as shown for the User:Login component in the example of FIG. 8.

The difference section 806 explains a difference between the actual 804 and expected 802 usage models. A positive (+) difference indicates that the QA system is oversubscribing testing effort, which means that more effort is being invested to test features that are little used in production. A negative difference (-) indicates an undersubscription of effort, which means that not enough effort is being invested in a feature that is used widely under production and may be critical and/or otherwise important for the software application product when deployed, for example. With data provided by the difference 806, a recommendation 150 can be generated by the correction generator 250 to eliminate the oversubscription and/or augment the undersubscription with respect to one or more features, for example.

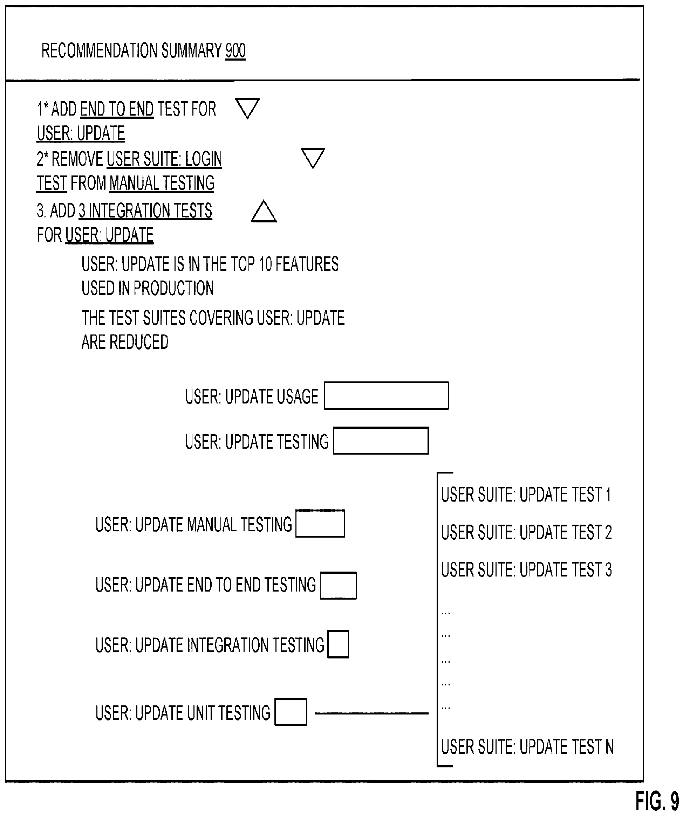

FIG. 9 depicts an example recommendation summary 900 that can be generated as a visual, interactive, graphical user interface output alone or together with FIGS. 7 and/or 8. The example recommendation summary dashboard interface 900 of FIG. 9 provides an ordered set of specific recommendations to drive improvement to the development and testing environments. The recommendations are ordered based on an impact they are estimated to cause and an effort to implement them, for example. A higher impact, lower cost recommendation is ordered first, for example. As shown in the example of FIG. 9, the ordered recommendation list uses the Pareto principle such that the recommendation engine 140 selects the higher 20% of the recommendations to be presented as actionable via the interface 900, which will (according to Pareto) provide 80% of a QA plan optimization. For each recommendation, one can drill down for a detailed explanation of the recommendation, as shown in the third recommendation of the example interface 900 to add three integration tests for user update. For this example, it is recommended that the User:Update component should be tested more, and the type of test to use are the Integration Type. The <Component:Feature> decision is based on the previous analysis (Test Effectiveness), and the type of test to be used is taken from the Test Creation Cost and the Test Type Ratio (e.g., the testing pyramid, etc.). The test pyramid is specified at the end of the drill down, which shows that an amount of integration testing for the User:Update feature is low. The recommendation engine 140 recommends keeping a healthy test type ratio for each of the tests, for example. Additionally, the second recommendation of the example of FIG. 9 shows an example of test elimination, which indicates an oversubscribing effort on testing the User:Login feature.

Thus, a new software development process can be implemented using the example apparatus 100, in which the initial investment in QA is to use Usage Software Analytics to instrument functionality and release an Alpha version of the software application for preview. Once the initial usage metrics are taken from production, the QA investment and improvement are guided by the prioritized recommendations from the recommendation engine 140. With this approach, a software development organization can maximize the benefits of all the QA process by only allocating effort to test part of the applications that are commonly used in production and by accepting that functionality that is not critical can fail, for example.

FIG. 10 is a block diagram of an example processor platform 1000 structured to execute the instructions of FIG. 3 to implement the example system 100 of FIG. 1. The processor platform 1000 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a headset or other wearable device, or any other type of computing device.

The processor platform 1000 of the illustrated example includes a processor 1012. The processor 1012 of the illustrated example is hardware. For example, the processor 1012 can be implemented by one or more integrated circuits, logic circuits, microprocessors, GPUs (including GPU hardware), DSPs, or controllers from any desired family or manufacturer. The hardware processor may be a semiconductor based (e.g., silicon based) device. In this example, the processor 1012 implements the example metric collector 110, the example metric collector 115, the example monitoring engine 120, the example metric aggregator 130, and the example recommendation engine 140.

The processor 1012 of the illustrated example includes a local memory 1013 (e.g., a cache, memory 110, etc.). The processor 1012 of the illustrated example is in communication with a main memory including a volatile memory 1014 and a non-volatile memory 1016 via a bus 1018. The volatile memory 1014 may be implemented by Synchronous Dynamic Random Access Memory (SDRAM), Dynamic Random Access Memory (DRAM), RAMBUS® Dynamic Random Access Memory (RDRAM®), and/or any other type of random access memory device. The non-volatile memory 1016 may be implemented by flash memory and/or any other desired type of memory device. Access to the main memory 1014, 1016, which can also be used to implement memory 110, is controlled by a memory controller.

The processor platform 1000 of the illustrated example also includes an interface circuit 1020. The interface circuit 1020 may be implemented by any type of interface standard, such as an Ethernet interface, a universal serial bus (USB), a Bluetooth® interface, a near field communication (NFC) interface, and/or a PCI express interface.

In the illustrated example, one or more input devices 1022 are connected to the interface circuit 1020. The input device(s) 1022 permit(s) a user to enter data and/or commands into the processor 1012. The input device(s) can be implemented by, for example, an audio sensor, a microphone, a camera (still or video), a keyboard, a button, a mouse, a touchscreen, a track-pad, a trackball, isopoint, and/or a voice recognition system.

One or more output devices 1024 are also connected to the interface circuit 1020 of the illustrated example. The output devices 1024 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuit 1020 of the illustrated example, thus, typically includes a graphics driver card, a graphics driver chip, and/or a graphics driver processor.

The interface circuit 1020 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1026. The communication can be via, for example, an Ethernet connection, a digital subscriber line (DSL) connection, a telephone line connection, a coaxial cable system, a satellite system, a line-of-site wireless system, a cellular telephone system, etc.

The processor platform 1000 of the illustrated example also includes one or more mass storage devices 1028 for storing software and/or data. Examples of such mass storage devices 1028 include floppy disk drives, hard drive disks, compact disk drives, Blu-ray disk drives, redundant array of independent disks (RAID) systems, and digital versatile disk (DVD) drives.

The machine executable instructions 1032 of FIG. 3 may be stored in the mass storage device 1028, in the volatile memory 1014, in the non-volatile memory 1016, and/or on a removable non-transitory computer readable storage medium such as a CD or DVD

From the foregoing, it will be appreciated that example systems, apparatus, devices, methods, and articles of manufacture have been disclosed that enable a processor to monitor and determine effectiveness of a software company's development and/or testing environments based on a difference in software behavior between the development and/or testing environment and software deployed in production. The disclosed systems, apparatus, devices, methods, and articles of manufacture improve the efficiency of using a computing device by enabling computers of any manufacture or model to capture, process, and model software usage based on events occurring in the development, testing, and/or production environments. The disclosed methods, apparatus, systems, and articles of manufacture enable changes to the development and/or testing software suites based on a processed gap or difference in software behavior and are accordingly directed to one or more improvement(s) in the functioning of a computer.

Examples disclosed herein capture processor data related to software development, testing, and runtime execution and convert that data into models of software application usage, behavior, and/or other characteristics. Examples disclosed herein insert monitors to gather program flow from the various stages of the testing suite and consolidate the monitored events to enable a recommendation processor to evaluate and develop actionable intelligence. Examples disclosed herein improve process and processor operation and improve software application development, testing, and execution.

Examples disclosed herein provide an apparatus and associated process to automatically improve software development, testing, and execution. The apparatus can be organized together and/or distributed among a plurality of agents on customer machines, monitors in development and testing environments, an external connection to a production environment, and a backend system (e.g., a cloud-based server, a private infrastructure, etc.) for data processing and actionable recommendation generation.

Examples disclosed herein can be implemented using artificial intelligence, such as machine learning, etc., to generate actionable recommendations for adjustment to the development and/or testing environments based on patterns learned in comparing expected usage models to actual usage models, for example. For example, a neural network can be implemented to receive input based on the gap between models and generate an output to reduce that gap. Feedback can be provided from software development, testing, and production over time to adjust weights among nodes in the neural network, for example.

Disclosed herein is an apparatus including a data processor to process data corresponding to events occurring with respect to a software application in i) at least one of a development environment or a testing environment and ii) a production environment. The example apparatus includes a model tool to: generate a first model of expected software usage based on the data corresponding to events occurring in the at least one of the development environment or the testing environment; and generate a second model of actual software usage based on the data corresponding to events occurring in the production environment. The example apparatus includes a model comparator to compare the first model to the second model to identify a difference between the first model and the second model; and a correction generator to generate an actionable recommendation to adjust the at least one of the development environment or the testing environment to reduce the difference between the first model and the second model.

In some examples, the apparatus further includes a metrics aggregator to consolidate the data collected with respect to the software application in the at least one of the development environment or the testing environment, and the data collected in the production environment.

In some examples, the apparatus further includes a multidimensional database to store the data.

In some examples, the apparatus further includes: a metric collector to collect the data from the at least one of the development environment or the testing environment; and a monitoring engine to collect the data from the production environment. In some examples, the monitoring engine includes a data collector to filter the data from the production environment to protect user privacy.

In some examples, the actionable recommendation includes implementing a test case to test operation of the software application.

In some examples, the correction generator is to generate a graphical user interface including usage information. In some examples, the usage information includes a measure of test effectiveness between the first model and the second model.

Disclosed herein is a non-transitory computer readable storage medium including computer readable instructions. When executed, the instructions cause at least one processor to at least: process data corresponding to events occurring with respect to a software application in i) at least one of a development environment or a testing environment and ii) a production environment; generate a first model of expected software usage based on the data corresponding to events occurring in the at least one of the development environment or the testing environment; generate a second model of actual software usage based on the data corresponding to events occurring in the production environment; compare the first model to the second model to identify a difference between the first model and the second model; and generate an actionable recommendation to adjust the at least one of the development environment or the testing environment to reduce the difference between the first model and the second model.

In some examples, the instructions, when executed, cause the at least one processor to consolidate the data collected with respect to the software application from the at least one of the development environment or the testing environment, and the data collected in the production environment.

In some examples, the instructions, when executed, cause the at least one processor to filter the data from the production environment to protect user privacy.

In some examples, the actionable recommendation includes implementing a test case to test operation of the software application.

In some examples, the instructions, when executed, cause the at least one processor to generate a graphical user interface including usage information. In some examples, the usage information includes a measure of test effectiveness between the first model and the second model.

Disclosed herein is a method including processing, by executing an instruction with at least one processor, data corresponding to events occurring with respect to a software application in i) at least one of a development environment or a testing environment and ii) a production environment. The example method includes generating, by executing an instruction with the at least one processor, a first model of expected software usage based on the data corresponding to events occurring in the at least one of the development environment or the testing environment. The example method includes generating, by executing an instruction with the at least one processor, a second model of actual software usage based on the data corresponding to events occurring in the production environment. The example method includes comparing, by executing an instruction with the at least one processor, the first model to the second model to identify a difference between the first model and the second model. The example method includes generating, by executing an instruction with the at least one processor, an actionable recommendation to adjust the at least one of the development environment or the testing environment to reduce the difference between the first model and the second model.

In some examples, the method includes consolidating the data collected with respect to the software application in the at least one of the development environment or the testing environment, and the data collected in the production environment.

In some examples, the method further includes filtering the data from the production environment to protect user privacy.

In some examples, the actionable recommendation includes implementing a test case to test operation of the software application.

In some examples, the method further includes generating a graphical user interface including usage information. In some examples, the usage information includes a measure of test effectiveness between the first model and the second model.

Disclosed herein is an apparatus including: memory including machine reachable instructions; and at least one processor to execute the instructions to: process data corresponding to events occurring with respect to a software application in i) at least one of a development environment or a testing environment and ii) a production environment; generate a first model of expected software usage based on the data corresponding to events occurring in the at least one of the development environment or the testing environment; generate a second model of actual software usage based on the data corresponding to events occurring in the production environment; compare the first model to the second model to identify a difference between the first model and the second model; and generate an actionable recommendation to adjust the at least one of the development environment or the testing environment to reduce the difference between the first model and the second model.

In some examples, the instructions, when executed, cause the at least one processor to consolidate the data collected with respect to the software application in the at least one of the development environment or the testing environment, and the data collected in the production environment.

In some examples, the instructions, when executed, cause the at least one processor to filter the data from the production environment to protect user privacy.

In some examples, the actionable recommendation includes implementing a test case to test operation of the software application.

In some examples, the instructions, when executed, cause the at least one processor to generate a graphical user interface including usage information. In some examples, the usage information includes a measure of test effectiveness between the first model and the second model.

Disclosed herein is an apparatus including: means for process data corresponding to events occurring with respect to a software application in i) at least one of a development environment or a testing environment and ii) a production environment; means for generating a first model of expected software usage based on data corresponding to events occurring in the at least one of the development environment or the testing environment and generating a second model of actual software usage based on data corresponding to events occurring in the production environment; means for comparing the first model to the second model to identify a difference between the first model and the second model; and means for generating an actionable recommendation to adjust the at least one of the development environment or the testing environment to reduce the difference between the first model and the second model.

Although certain example methods, apparatus, systems, and articles of manufacture have been disclosed herein, the scope of coverage of this patent is not limited thereto. On the contrary, this patent covers all methods, apparatus, systems, and articles of manufacture fairly falling within the scope of the claims of this patent.

## Claims

1. An apparatus comprising:
a data processor to process data corresponding to events occurring with respect to a software application in i) at least one of a development environment or a testing environment and ii) a production environment;
a model tool to:
generate a first model of expected software usage based on the data corresponding to events occurring in the at least one of the development environment or the testing environment; and
generate a second model of actual software usage based on the data corresponding to events occurring in the production environment;
a model comparator to compare the first model to the second model to identify a difference between the first model and the second model; and
a correction generator to generate an actionable recommendation to adjust the at least one of the development environment or the testing environment to reduce the difference between the first model and the second model.

2. The apparatus of claim 1, further including a metrics aggregator to consolidate the data collected with respect to the software application in the at least one of the development environment or the testing environment, and the data collected in the production environment.

3. The apparatus of claim 1, further including a multidimensional database to store the data.

4. The apparatus of claim 1, further including:
a metric collector to collect the data from the at least one of the development environment or the testing environment; and
a monitoring engine to collect the data from the production environment.

5. The apparatus of claim 4, wherein the monitoring engine includes a data collector to filter the data from the production environment to protect user privacy.

6. The apparatus of claim 1, wherein the actionable recommendation includes implementing a test case to test operation of the software application.

7. The apparatus of claim 1, wherein the correction generator is to generate a graphical user interface including usage information.

8. The apparatus of claim 7, wherein the usage information includes a measure of test effectiveness between the first model and the second model.

9. A method comprising:
processing, by executing an instruction with at least one processor, data corresponding to events occurring with respect to a software application in i) at least one of a development environment or a testing environment and ii) a production environment;
generating, by executing an instruction with the at least one processor, a first model of expected software usage based on the data corresponding to events occurring in the at least one of the development environment or the testing environment;
generating, by executing an instruction with the at least one processor, a second model of actual software usage based on the data corresponding to events occurring in the production environment;
comparing, by executing an instruction with the at least one processor, the first model to the second model to identify a difference between the first model and the second model; and
generating, by executing an instruction with the at least one processor, an actionable recommendation to adjust the at least one of the development environment or the testing environment to reduce the difference between the first model and the second model.

10. The method of claim 9, further including consolidating the data collected with respect to the software application in the at least one of the development environment or the testing environment, and the data collected in the production environment.

11. The method of claim 9, further including filtering the data from the production environment to protect user privacy.

12. The method of claim 9, wherein the actionable recommendation includes implementing a test case to test operation of the software application.

13. The method of claim 9, further including generating a graphical user interface including usage information.

14. The method of claim 13, wherein the usage information includes a measure of test effectiveness between the first model and the second model.

15. A computer-readable medium including instructions that, when executed, implement the method of any of claims 9-14.
